# EUROPÄISCHE PATENTANMELDUNG

(11) **EP 4 593 124 A1**
(43) Veröffentlichungstag der Anmeldung: **30.07.2025**
(21) Anmeldenummer: 25152029.2
(22) Anmeldetag: 15.01.2025
(51) Int. Cl.: H01M 4/66, H01M 10/42, H01M 4/13, H01M 10/654, A62C 3/16, H01M 10/052, H01M 10/0562, H01M 50/383

(54) **FESTKÖRPERBATTERIE**

(30) Priorität: 26.01.2024 DE 102024000261
(71) Anmelder: Mercedes-Benz Group AG, 70372 Stuttgart (DE)
(72) Erfinder: ÜNAL, Mahir, 70597 Stuttgart (DE); CHANG, Hansen, 70178 Stuttgart (DE); HSU, Hungjen, 86633 Neuburg an der Donau (DE)
(74) Vertreter: Weller, Jürgen

(57) **Zusammenfassung**

Die Erfindung betrifft eine Festkörperbatterie (1) mit zumindest einem kathodenseitigen Stromsammler (2), einer Kathodenschicht (3), einer Separatorschicht (4) und einem anodenseitigen Stromsammler (6). Die erfindungsgemäße Festkörperbatterie ist dadurch gekennzeichnet, dass zwischen der Kathodenschicht (3) und dem kathodenseitigen Stromsammler (2) eine Sicherheitsschicht (7) angeordnet ist, welche Kohlenstoff und wenigstens ein thermisch sensitives Salz aufweist, welches sich bei Temperaturen in der Größenordnung von 100° bis 180° C zersetzt.

## Beschreibung

Die Erfindung betrifft eine Festkörperbatterie mit zumindest einem anodenseitigen und einem kathodenseitigen Stromsammler, einer Kathodenschicht und einer Separatorschicht.

Festkörperbatterien sind prinzipiell aus dem Stand der Technik bekannt. So wird beispielsweise in dem Fachartikel "High-energy long-cycling all-solid-state lithium metal batteries enabled by silver-carbon composite anodes" von Yong-Gun Lee et al. In Nature Energy https://doi.org/10.1038/s41560-020-575-z eine Festkörperbatterie mit einer Lithium-Metall-Anode beschrieben. Dieser Aufbau wird häufig auch als anodenfreie Festkörperbatterie bezeichnet. Über den Einsatz einer anodenseitigen Zwischenschicht aus Silber und Kohlenstoff wird hier die Performance gesteigert.

Problematisch bei Batterien, insbesondere bei Lithium-Batterien, kann ein sogenanntes thermisches Durchgehen der Batterie sein, bei welchem sich aufgrund von Fehlfunktionen, Kurzschlüssen oder dergleichen unerwartet hohe Temperaturen ausbilden, welche auf benachbarte Batteriezellen übergreifen können und im schlimmsten Fall zu einem Brand der gesamten Festkörperbatterie führen könnten. In diesem Zusammenhang beschreibt die US 10,651,521 B2 den Einsatz von endothermisch reagierenden Materialien um die Batterieeinzelzellen herum, um so entstehende Wärme aufnehmen zu können. Damit lässt sich ein Fortschreiten der unerwünschten Erwärmung verhindern. Der Nachteil besteht in dem prinzipiellen Aufbau, welcher um die Batterieeinzelzellen herum die geeigneten Materialien benötigt, wodurch vergleichsweise viel Bauraum beansprucht wird. Die Energiedichte einer solchen Batterie sinkt daher, was insbesondere für Anwendungen beispielsweise in Fahrzeugen ein gravierender Nachteil ist, da hierdurch beim zur Verfügung stehenden Bauraum die mit dem Fahrzeug zu erwartende Reichweite sinkt.

Die Aufgabe der hier vorliegenden Erfindung ist es nun eine verbesserte Festkörperbatterie anzugeben, bei welcher eine hohe Sicherheit bei gleichzeitig hoher Leistungsdichte ermöglicht wird.

Erfindungsgemäß wird diese Aufgabe durch eine Festkörperbatterie mit den Merkmalen im Anspruch 1, und hier insbesondere im kennzeichnenden Teil des Anspruchs 1, gelöst. Vorteilhafte Ausgestaltungen und Weiterbildungen ergeben sich aus den hiervon abhängigen Unteransprüchen.

Die erfindungsgemäße Festkörperbatterie umfasst anodenseitige und kathodenseitige Stromsammler, eine Kathodenschicht und eine Separatorschicht. Sie kann gemäß einer sehr günstigen Ausgestaltung anodenfrei ausgebildet sein, sodass hier die in diesem Fall metallische Anode unerwähnt bleibt. Gemäß einer weiteren Ausgestaltung kann es jedoch auch vorgesehen sein, dass diese eine herkömmliche Anode aufweist. Für die nachfolgend beschriebene Erfindung ist der anodenseitige Aufbau der Festkörperbatterie aber ohnehin nicht weiter relevant.

Die Besonderheit in dem Aufbau der erfindungsgemäßen Festkörperbatterie liegt im Bereich der Kathode. Erfindungsgemäß ist zwischen der Kathodenschicht und dem kathodenseitigen Stromsammler eine Sicherheitsschicht angeordnet. Diese Sicherheitsschicht umfasst Kohlenstoff und ein thermisch sensitives Salz, welches sich bei Temperaturen in der Größenordnung von 100° bis 180° C zersetzt. Die Mischung aus dem Kohlenstoff und dem Salz ermöglicht im regulären Betrieb einen Stromfluss aus der Kathode in den kathodenseitigen Stromsammler, da zumindest der in der Sicherheitsschicht befindliche Kohlenstoff elektrisch leitend ist. Die Festkörperbatterie funktioniert damit im regulären Betrieb in der erwartungsgemäßen Art und Weise. Kommt es nun zu Temperaturen in einem kritischen Bereich, welcher typischerweise in einer Größenordnung zwischen 100° C und 180° C beginnt, dann zersetzen sich die Salze bzw. das Salz in der Sicherheitsschicht. Hierdurch werden Stoffe wie beispielsweise Gase frei, welche dazu führen, dass der elektrische Widerstand der Sicherheitsschicht entsprechend ansteigt und der Stromfluss zwischen der Kathode und dem kathodenseitigen Stromsammler sich dementsprechend verringert. Die Sicherheitsschicht sorgt also temperaturabhängig für einen zunehmenden elektrischen Widerstand und damit für eine Selbstabschaltung der betroffenen Batterieeinzelzelle, sodass hier die Sicherheit gesteigert wird. Die Sicherheitsschicht selbst ist dabei als zusätzliche Schicht im Aufbau der Festkörperbatterie vergleichsweise dünn und damit klein bezüglich ihres Bauvolumens, sodass dieser Sicherheitsvorteil ohne eine nennenswerte Einschränkung der Leistungsdichte einer solchen Festkörperbatterie erreicht wird.

Gemäß einer sehr vorteilhaften Weiterbildung der Festkörperbatterie gemäß der Erfindung ist es dabei vorgesehen, dass das Salz bzw. die Salze beim Zersetzen alleine und/oder durch die Reaktion mit dem in der Sicherheitsschicht vorhandenen Kohlenstoff Gase freisetzt/freisetzen. Diese Gase sorgen dann für zunehmend größer werdende nichtleitende Bereiche innerhalb der Sicherheitsschicht und blähen diese auf. Dies begünstigt den oben angesprochenen Effekt der zunehmenden Selbstabschaltung.

Gemäß einer sehr vorteilhaften Weiterbildung sind die freigesetzten Gase dabei gasförmiges Kohlendioxid. Dieses ist elektrisch nichtleitend und nicht brennbar.

Als thermisch sensitive Salze lassen sich im Wesentlichen alle geeigneten Salze einsetzen. Dies können insbesondere Karbonate und Phosphate sein. Gemäß einer sehr vorteilhaften Ausgestaltung kann das Salz zumindest Magnesiumkarbonat, Silberkarbonat und/oder Magnesiumphosphat umfassen.

Der Kohlenstoff in der Sicherheitsschicht kann ebenfalls in beliebiger Form vorliegen, solange er die elektrische Leitfähigkeit der Sicherheitsschicht sicherstellt. Gemäß einer vorteilhaften Weiterbildung umfasst der in der Sicherheitsschicht vorhandene Kohlenstoff insbesondere Ruß, Kohlenstoffnanoröhrchen, Kohlenstoffnanofasern und andere vergleichbare Materialien.

Die Sicherheitsschicht umfasst dabei gemäß ein er sehr vorteilhaften Ausgestaltung der Festköperbatterie gemäß der Erfindung eine Mischung von Kohlenstoff und Salz im Verhältnis von 1:1, jeweils bezogen auf das Gewicht. Besonders bevorzugt umfasst die Mischung zwei Teile Kohlenstoff und einen Teil Salz. Speziell diese Mischung mit einem Verhältnis zu 2:1 von Kohlenstoff zu Salz hat sich als besonders effizient herausgestellt, um einerseits die elektrische Leitfähigkeit im regulären Betrieb zu gewährleisten und andererseits bei einer unerwarteten und ungewollten thermischen Reaktion innerhalb des Aufbaus den Sicherheitsmechanismus im oben beschriebenen Sinn freizusetzen, Das Mischungsverhältnis von 2:1 erlaubt dabei ein früheres Einsetzen des Effekts, als die Mischung in Verhältnis 1:1.

Weitere vorteilhafte Ausgestaltungen des Aufbaus der Festkörperbatterie ergeben sich auch aus dem Ausführungsbeispiel, welches nachfolgend unter Bezugnahme auf die Figuren näher beschrieben ist.

Dabei zeigen:
- Fig. 1: einen Schichtaufbau einer Festkörperbatterie in einer Ausführungsform gemäß dem Stand der Technik; und
- Fig. 2: einen Schichtaufbau anlog zur Darstellung in Fig. 1 in einer Ausführungsvariante gemäß der Erfindung.

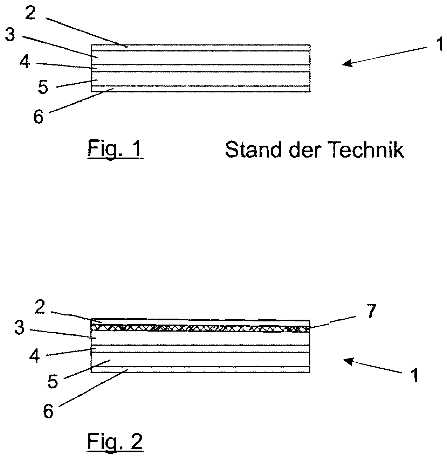

In der Darstellung der Figur 1 ist ein Ausschnitt aus dem typischen Schichtaufbau einer möglichen Festkörperbatterie 1 schematisch angedeutet. Von oben nach unten besteht dieser beispielhafte Schichtaufbau der Festkörperbatterie 1 aus einem kathodenseitigen Stromsammler 2, der Kathodenschicht 3, einem Separator 4, der Anodenschicht 5 sowie einem anodenseitigen Stromsammler 6. Dieser Aufbau ist soweit allgemein bekannt und kann mit verschiedenen prinzipiell bekannten Materialien umgesetzt werden.

Figur 2 zeigt in einer analogen Darstellung hierzu den erfindungsgemäßen Aufbau einer Festkörperbatterie 1. Auch hier besteht der Aufbau im Wesentlichen aus den im Rahmen der Figur 1 genannten Schichten, nämlich ganz oben dargestellt dem kathodenseitigen Stromsammler 2 und ganz unten dargestellt dem anodenseitigen Stromsammler 6. Auf diesen folgt von unten nach oben die Anodenschicht 5, der Separator 4 und die Kathodenschicht 3.

Die Besonderheit ist nun die hier mit unregelmäßiger Kreuzschraffur versehene Sicherheitsschicht 7. Diese Sicherheitsschicht 7 hat die Aufgabe im Falle einer unerwarteten Selbsterwärmung der Festkörperbatterie 1 ein thermisches Durchgehen zu verhindern, indem der elektrische Widerstand zwischen der Kathodenschicht 3 und dem kathodenseitigen Stromsammler 2 erhöht wird. Dies führt zu einer Reduktion der elektrochemischen Aktivität der gesamten Festkörperbatterie 1 und verhindert so eine weitere Selbsterwärmung und ein potenzielles thermisches Durchgehen.

Die Sicherheitsschicht 7 umfasst dafür Kohlenstoff beispielsweise in Form von Ruß, von Kohlenstoffnanofasern, Kohlenstoffnanoröhrchen oder vergleichbaren kohlenstoffhaltigen Materialien. Dieser Kohlenstoff ist in der Sicherheitsschicht 7 mit einem oder mehreren thermisch sensitiven Salzen vermischt, welche sich zersetzen, bevor kritische Temperaturen erreicht werden. Sie zersetzen sich typischerweise in einem Temperaturbereich zwischen 100° C und 180° C, welcher insbesondere für eine sogenannte anodenfreie Festkörperbatterie 1 der charakteristische relevante Temperaturbereich ist.

Das Salz bzw. die Salze erzeugen dabei insbesondere Gase, vorzugsweise gasförmiges Kohlendioxid, welches die Sicherheitsschicht 7 durch sich bildende Gastaschen aufbläht. Außerdem sind diese Gastaschen elektrisch isolierend. Durch die elektrische Isolationswirkung der Gastaschen einerseits und das Aufblähen andererseits steigt der elektrische Widerstand in der Festkörperbatterie 1 an, sodass eine weitere Erwärmung sicher und zuverlässig verhindert werden kann. Einige beispielhafte Salze, welche eingesetzt werden könnten, sind dabei Magnesiumkarbonat MgCOa, Silberkarbonat Ag₂CO₃ oder Magnesiumphosphat Mg₃(PO₄)₂. Diese Salze bilden gasförmiges Kohlendioxid aus, wenn Sie sich unter Anwesenheit des Kohlenstoffs zersetzen. Kohlendioxid als Gas bietet neben seinen elektrisch isolierenden und die Sicherheitsschicht 7 aufblähenden Eigenschaften außerdem den Vorteil, dass es nicht brennbar ist.

## Patentansprüche

1. Festkörperbatterie (1) mit zumindest einem kathodenseitigen Stromsammler (2), einer Kathodenschicht (3), einer Separatorschicht (4) und einem anodenseitigen Stromsammler (6),
**dadurch gekennzeichnet, dass**
zwischen der Kathodenschicht (3) und dem kathodenseitigen Stromsammler (2) eine Sicherheitsschicht (7) angeordnet ist, welche Kohlenstoff und wenigstens ein thermisch sensitives Salz aufweist, welches sich bei Temperaturen in der Größenordnung von 100° bis 180° C zersetzt.

2. Festkörperbatterie (1) nach Anspruch 1,
**dadurch gekennzeichnet, dass**
das wenigstens eine Salz beim Zersetzen alleine oder durch Reaktion mit dem Kohlenstoff Gase freisetzt.

3. Festkörperbatterie (1) nach Anspruch 2,
**dadurch gekennzeichnet, dass**
die Gase Kohlendioxid enthalten oder aus solchem bestehen.

4. Festkörperbatterie (1) nach Anspruch 1, 2 oder 3,
**dadurch gekennzeichnet, dass**
das wenigstens eine Salz zumindest Magnesiumkarbonat, Silberkarbonat und/oder Magnesiumphosphat umfasst.

5. Festkörperbatterie (1) nach einem der Ansprüche 1 bis 4,
**dadurch gekennzeichnet, dass**
der Kohlenstoffanteil der Sicherheitsschicht (7) Ruß, Kohlenstoffnanoröhrchen und/oder Kohlenstoffnanofasern aufweist.

6. Festkörperbatterie (1) nach einem der Ansprüche 1 bis 5,
**dadurch gekennzeichnet, dass**
das Mischungsverhältnis in der Sicherheitsschicht (7) bei 1:1, bevorzugt bei 2:1, von Kohlenstoff zu Salz, jeweils bezogen auf das Gewicht, liegt.

7. Festkörperbatterie (1) nach einem der Ansprüche 1 bis 6
**gekennzeichnet durch**
ihre anodenfreie Ausgestaltung.
